# EUROPEAN PATENT SPECIFICATION

(11) **EP 3 811 344 B1**
(45) Date of publication and mention of the grant of the patent: **09.12.2026**
(21) Application number: 19821491.8
(22) Date of filing: 21.06.2019
(51) Int. Cl.: G06K 19/07, G07F 7/08, G07F 7/10, G06Q 20/04, G06Q 20/32, G06Q 20/34, G06Q 20/38, G06Q 20/40

(54) **SYSTEMS AND METHODS FOR SECURE READ-ONLY AUTHENTICATION**
SYSTEME UND VERFAHREN ZUR SICHEREN NUR-LESE-AUTHENTIFIZIERUNG
SYSTÈMES ET PROCÉDÉS DESTINÉS À UNE AUTHENTIFICATION EN LECTURE SEULE SÉCURISÉE

(30) Priority: 21.06.2018 US 201816014542
(43) Date of publication of application: 28.04.2021
(73) Proprietor: Capital One Services, LLC, McLean, Virginia 22102 (US)
(72) Inventor: OSBORN, Kevin, Newton Highlands, Massachusetts 02461 (US); KELLY, Kevin, Austin, Texas 78721 (US)
(74) Representative: Boult Wade Tennant LLP
(86) International application number: PCT/US2019/038487
(87) International publication number: WO 2019/246533

(56) References cited:
- EP-A1- 2 854 332
- EP-A1- 2 913 973
- EP-A1- 3 336 740
- US-A1- 2006 237 528
- US-A1- 2011 208 658
- US-A1- 2011 211 219
- US-A1- 2012 150 737
- US-A1- 2013 099 587
- US-A1- 2013 200 999
- US-A1- 2015 302 409

## Description

### RELATED APPLICATIONS

This application claims priority to U.S. Patent Application No. 16/014,542, filed on June 21, 2018,

### DESCRIPTION

### Technical Field

The disclosed embodiments generally relate to authenticating an account card and, more particularly, to authenticating an account card using a synchronized counter.

### Background

Many types of interactions on computer systems, such as authenticated log-ins and other transaction-based processes, are insecure. For example, when attempting to log in to a website on a computer, the website may request a username and password. Anyone with that set of information - be it an authorized user or a nefarious one - may use the website for any purpose. To combat this insecurity, some transactions require multi-factor authentication-often referred to as "what you know and what you have." For example, when logging into a website, the website may request a username/password combination ("what you know") along with a six-digit number displayed on an electronic device ("what you have") or a fingerprint scan ("who you are"). The six-digit number, also known as a time-based one-time password (TOTP), may change every 30 seconds so as to avoid reuse by an unauthorized user. As another example, a credit card may have information stored on it that can enable a credit card processor to know whether the card is physically present in the user's hands. For example, while the card may have a card number printed on the obverse ("what you know") some information may only be present as part of an EMV chip ("what you have"). Certain devices may read information from the EMV chip for contactless authentication of the user. Some devices allow multi-factor authentication using a "what you know" factor and a "who you are," e.g., a biometric such as face recognition, fingerprint verification, and/or iris scan.

Currently EMV protocol relies on two-way communication between the EMV chip of the transaction card and a payment terminal, for example, at a point-of-sale (POS). To complete a transaction, transaction information is sent to the transaction card from the payment terminal. The EMV chip receives the transaction information, digitally signs the information, and transmits the signed information back to the payment terminal for verification. However, many devices and/or operating systems do not support two-way communication and therefore cannot complete transactions with EMV-enabled transaction cards.

Due to these and other drawbacks associated with authentication using a two-way communication protocol, there exists a need for technology allowing secure, read-only authentication,

EP2913973 discusses an NFC smart poster tag.

EP2854332 discusses a method and system for securing an issuer update processing for mobile payment application.

US2006/237528 discusses systems and methods for facilitating transactions using non-traditional devices. Such a method includes the steps of forming a transaction request at a non-traditional device, and communicating the transaction request to a reader. The non-traditional device may be configured with a transponder or other RF operable device. In another example, the non-traditional device may be configured with an RFID protocol, such as a protocol in ISO 8583 format. In yet another example, the non-traditional device may be configured to facilitate transactions using a random number, an authentication tag, a counter, or an encrypted payload.

### SUMMARY

The invention, and various embodiments thereof, is set out in the appended claims.

### BRIEF DESCRIPTION OF THE DRAWINGS

The accompanying drawings, which are incorporated in and constitute a part of this specification, illustrate several embodiments and, together with the description, serve to explain the disclosed principles. In the drawings:
Fig. 1 is a block diagram of an exemplary system, consistent with disclosed embodiments;
Figs. 2A-2C are diagrams of exemplary transaction cards, consistent with disclosed embodiments;
Figs. 3A-3C are flowcharts illustrating the incrementation of a temporary identifier, consistent with disclosed embodiments; and
Fig. 4 is a flowchart of an exemplary process for authenticating a user with a transaction card having a polymorphic tag, consistent with disclosed embodiments.

### DESCRIPTION OF THE EMBODIMENTS

Reference will now be made in detail to exemplary embodiments, examples of which are illustrated in the accompanying drawings and disclosed herein. Wherever convenient, the same reference numbers will be used throughout the drawings to refer to the same or like parts.

In disclosed embodiments, a user may use a transaction card as a form of authentication when completing a financial transaction on a mobile device. The transaction card may be associated with a financial account held by the user with a financial service provider. Most transaction cards include static identifiers in one or more RFID tags or other storage components. However, such static identifiers are easily duplicated by nefarious users. Disclosed embodiments implement a transaction card including a dynamic polymorphic tag that changes each time the tag is read. This dynamic tag is more secure than traditional static tags and prevents nefarious users from simply duplicating and using the tag.

The term "transaction card," as used herein, refers to any physical card product that is configured to provide information, such as financial information (e.g., card numbers, account numbers, account balance, etc.), quasi-financial information (e.g., rewards balance, discount information, etc.), and/or individual-identifying information (e.g., name, address, etc.), when the card is read by a card reader. Examples of transaction cards include credit cards, debit cards, gift cards, rewards cards, frequent flyer cards, merchant-specific cards, discount cards, etc., but are not limited thereto. The term "transaction card" may include an identification card such as a passport card, a driver's license, an entry point access card, or the like. The physical properties of the transaction card (e.g., size, flexibility, location of various components included in the card) may meet the various international standards, including, e.g., ISO/IEC 7810, ISO/IEC 7811, ISO/IEC 7812, ISO/IEC 7813, ISO/IEC 7816, ISO 8583, ISO/IEC 4909, and ISO/IEC 14443. For example, a transaction card may have a dimension of 85.60 mm (width) by 53.98 mm (height) by 0.76 mm (thickness), as specified in ISO/IEC 7810.

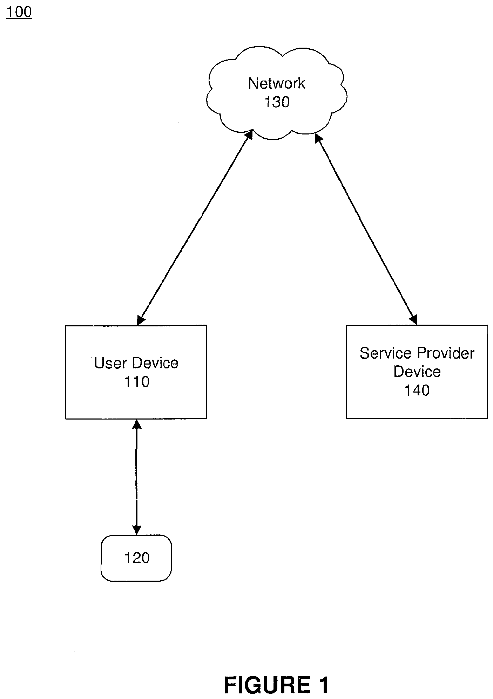

Figure 1 shows a diagram of an exemplary system 100, consistent with disclosed embodiments. As shown in Figure 1, system 100 may include a user device 110, a transaction card 120, a network 130 to facilitate communication among the components of system 100, and a service provider (SP) device 140. The components and arrangement of the components included in system 100 may vary. Thus, system 100 may further include other components that perform or assist in the performance of one or more processes consistent with the disclosed embodiments. The components and arrangements shown in Figure 1 are not intended to limit the disclosed embodiments, as the components used to implement the disclosed processes and features may vary.

System 100 may include one or more user devices 110. A user may operate a user device 110, which may be a desktop computer, laptop, tablet, smartphone, multifunctional watch, pair of multifunctional glasses, tracking device, or any suitable device with computing capability. User device 110 may include one or more processor(s) and memory device(s) known to those skilled in the art. For example, user device 110 may include memory device(s) that store data and software instructions that, when executed by one or more processor(s), perform operations consistent with the disclosed embodiments. In one aspect, user device 110 may have a transaction application installed thereon, which may enable user device 110 to communicate with transaction card 120 or SP device 140, via network 130 or via other means (e.g., a near-field communication device). For instance, user device 110 may be a smartphone or tablet or the like that executes a stored mobile application to perform various electronic transactions, such as authentication operations (e.g., logging into a computer system), banking operations (e.g., funds transfer, purchase, or cash withdrawal), or the like. In other embodiments, user device 110 may connect to SP device 140 through use of browser software stored and executed by user device 110. User device 110 may be configured to execute software instructions to allow a user to access information stored in SP device 140, such as, for example, private keys or other authentication information, financial information related to recent purchase transactions, financial discounts, financial statements, account information, rewards program information and the like. Additionally, user device 110 may be configured to execute software instructions that initiate and conduct transactions with SP device 140 and/or transaction card 120, such as, for example, a log-in or authentication, with a website or computer, cash withdrawals, wire transfers, PIN resets, or call center transactions.

User device 110 may perform one or more operations consistent with the disclosed embodiments. User device 110 may be operated by a user. In one aspect, the user may be a customer of a financial service provider (e.g., a financial service provider operating SP device 140). For instance, a financial service provider may maintain a financial service account (e.g., checking account, savings account, debit card account, or credit card account) for the user of user device 110. User device 110 (and/or other items, such as a card, a token, a key fob, or the like) may access such an account to facilitate the purchase of goods, services, or information. Additionally or alternatively, user device 110 and the financial service account (for example, through a mobile application installed on user device 110) may initiate the withdrawal of cash from an ATM, contact a customer call center, transfer or wire money, or reset their debit account PIN.

In some embodiments, user device 110 may include an RFID reader, which may detect transaction card 120 using one or more wireless protocols (e.g., Near Field Communication (NFC), BLUETOOTH^{™}, BLUETOOTH LE^{™} (BLE), Radio-Frequency Identification (RFID)). As explained below, transaction card 120 may include a polymorphic tag enabling the user to use transaction card 120 as a factor in a multi-factor authentication process. User device 110 may read an encryption of a tag and a "salt," that is, a piece of random data, stored on transaction card 120 and compare the encryption to an expected value stored on SP device 140.

Transaction card 120 may be configured to transmit data using protocols such as BLUETOOTH^{™}, BLUETOOTH LE^{™} (BLE), Wi-Fi, near field communications (NFC), or the like. In some embodiments, transaction card 120 may also comprise a wireless transmitter, e.g., RFID transmitter.

In some embodiments, transaction card 120 may comprise one or more memory devices that store one or more identifiers. For example, transaction card 120 may store a tag, or permanent identifier, that uniquely identifies transaction card 120, as well as one or more other temporary/rolling identifiers, e.g., a salt value. For example, transaction card 120 may be configured to store a tag including a private key and a salt that is incremented each time the transaction card 120 is read by user device 110. Transaction card 120 may store the salt in memory (e.g., by overwriting a previously recorded salt). Transaction card 120 may comprise an RFID transmitter configured to send an encryption of the permanent identifier and temporary identifier to user device 110. In some embodiments, one or more identifiers may be stored in a database accessible to SP device 120.

Consistent with disclosed embodiments, SP device 140 may be a system associated with a website, such as a secure data storage website that stores and provides data to users. SP device 140 may also be a system associated with a financial service provider (not shown), such as a bank, a credit card company, a lender, brokerage firm, or any other type of financial service entity that generates, provides, manages, and maintains financial service accounts, etc. for one or more users.

SP device 140 may be implemented as one or more computing systems that are configured to execute software instructions stored on one or more memory devices to perform one or more operations consistent with the disclosed embodiments. For example, SP device 140 may include one or more memory device(s) storing data and software instructions, and one or more processor(s) configured to use the data and execute the software instructions to perform server-based functions and operations known to those skilled in the art. SP device 140 may include one or more general purpose computers, mainframe computers, or any combination of these types of components.

In certain embodiments, SP device 140 may be configured as a particular apparatus, system, and the like based on the storage, execution, and/or implementation of the software instructions that cause a processor to perform one or more operations consistent with the disclosed embodiments. SP device 140 may be standalone, or it may be part of a subsystem, which is in turn part of a larger system. For example, SP device 140 may represent distributed servers that are remotely located and communicate over a public network (e.g., network 140) or a dedicated network, such as a LAN, for a financial service provider.

SP device 140 may include or may access one or more storage devices configured to store data and/or software instructions used by one or more processors of SP device 140 to perform operations consistent with disclosed embodiments. For example, SP device 140 may include a memory configured to store one or more software programs that performs several functions when executed by a processor. The disclosed embodiments are not limited to separate programs or computers configured to perform dedicated tasks. For example, SP device 140 may include memory that stores a single program or multiple programs. Additionally, SP device 140 may execute one or more programs located remotely from SP device 140. For example, SP device 140 may access one or more remote programs stored in memory included with a remote component that, when executed, perform operations consistent with the disclosed embodiments. In certain aspects, SP device 140 may include server software that generates, maintains, and provides services associated with financial account management. In other aspects, SP device 140 may connect separate server(s) or similar computing devices that generate, maintain, and provide services associated with financial data for a financial service provider associated with SP device 140.

SP device 140 may be configured to generate and send an expected value to user device 110. The expected value may correspond to the tag and salt of the transaction card 120. SP device 140 may also be connected to a database and may store generated tag and salt pairs associated with one or more transaction cards 120.

Network 130 may comprise any type of computer networking arrangement used to exchange data. For example, network 130 may be one or more of the Internet, a private data network, a virtual private network over a public network, a Wi-Fi network, a LAN or WAN network, and/or other suitable connections that may enable information exchange among various components of the system 100. Network 130 may also include a public switched telephone network ("PSTN") and/or a wireless cellular network. Network 130 may be a secured network or unsecured network. In other embodiments, one or more components of system 100 may communicate directly through a dedicated communication link(s), such as links between user device 110 and service provider device 140.

Additionally or alternatively, network 130 may include a direct communication network. Direct communications may use any suitable technologies, including, for example, BLUETOOTH^{™}, BLUETOOTH LE^{™} (BLE), Wi-Fi, near field communications (NFC), or other suitable communication methods that provide a medium for transmitting data between separate devices. In certain embodiments, user device 110 may connect and communicate through a direct communications network.

Other components known to one of ordinary skill in the art may be included in system 100 to process, transmit, provide, and receive information consistent with the disclosed embodiments.

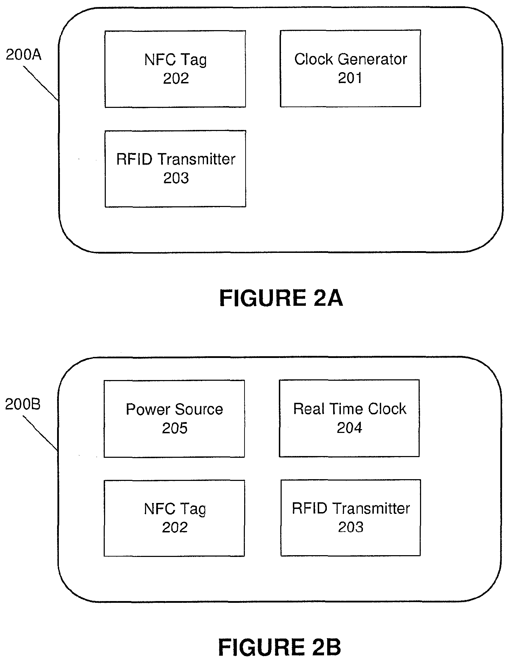

Figure 2A is a diagram of an exemplary transaction card 200A, which may correspond to transaction card 120 (Fig. 1) consistent with disclosed embodiments. Card 200A may include a clock generator 201, an NFC tag 202, and an RFID transmitter 203.

Clock generator 201 may be configured to cycle on in response to electromagnetic emissions from an RFID reader. For example, transaction card 200A may include a Javacard chip, including NFC tag 202, using ISO 14443, such that clock generator 201 may cycle on upon receipt of a signal having a frequency of 13.56 mHz from an RFID reader. Each time clock generator 201 cycles on, a counter may be incremented by a preconfigured value unique to the transaction card. Thus, clock generator 201 may be configured to "clock" each read of the transaction card 120 by an RFID reader. The starting value of the counter may also be a unique, preconfigured, non-zero value. Clock generator 201 may be any configuration of clock generator circuitry known to one of skill in the art.

NFC tag 202 may be a chip including an antenna and an integrated circuit (IC). In some embodiments NFC tag 202 may be an RFID tag. In another embodiment, NFC tag 202 may be a component of a microchip or microcontroller operating via NFC coil. In some embodiments, transaction card 200A may include a microchip (e.g., EMV chip), a communication device (e.g., Near Field Communication (NFC) antenna, Bluetooth^{®} device, WiFi device), a magnetic strip, a barcode, a Quick Response (QR) code, and/or other devices in addition to, or instead of, NFC tag 202. In some embodiments, NFC tag 202 may be a component of a Javacard chip operating under the ISO 14443 standard.

In some embodiments, NFC tag 202 may store information comprising a permanent identifier and a temporary identifier, also referred to as a tag and a salt, respectively. The permanent identifier may comprise an identification number unique to the user. In some embodiments, the permanent identifier may be an identification number unique to the transaction card. In another embodiment, the permanent identifier comprises transaction data stored by NFC tag 202. For example, a merchant ID for the past one, two, three, etc. transactions. In other embodiments, stored transaction data may include transaction type, merchant ID, transaction amount, or any combination thereof. The temporary identifier may be data, for example, a numerical value, that may be appended to the permanent identifier. Upon detecting an electromagnetic signal emitted from an RFID reader, e.g., an RFID reader disposed in a mobile device, a current may be induced in a coil of NFC tag 202, thereby powering clock generator 201 to cycle on, causing the temporary identifier to increase by the preconfigured increment. The NFC tag 202 then generates an encryption of the permanent identifier and the incremented temporary identifier. In some embodiments, the encryption may comprise a hash of the permanent identifier and the incremented temporary identifier.

RFID transmitter 203 may be configured to transmit the encrypted value to a device, e.g., user device 110. RFID transmitter 203 may be part of NFC tag 202 and may be configured to transmit the encrypted value to an RFID reader responsive to a signal received from the reader. RFID transmitter 203 may further be configured to transmit encrypted transaction card data to user device 110.

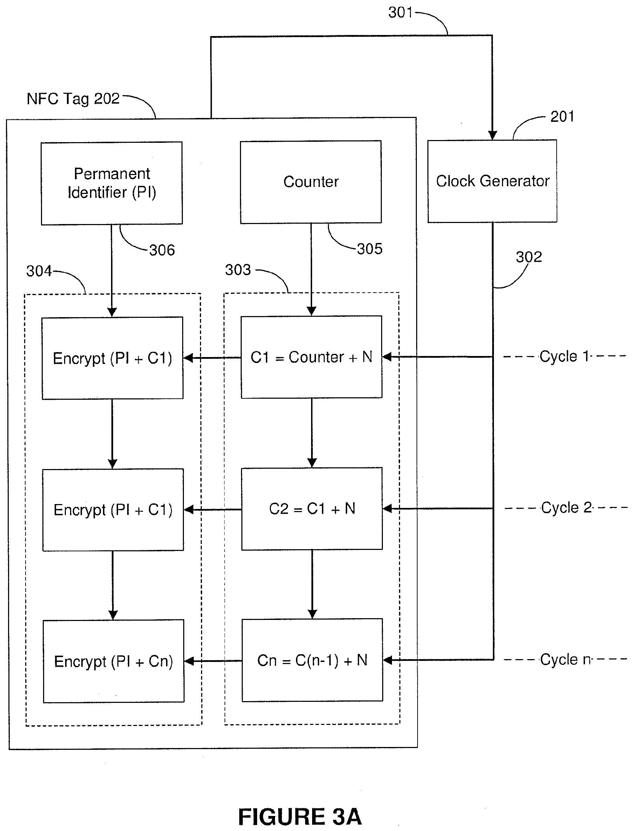

For example, with reference to Figure 3A, at a first cycle, NFC tag 202 may detect a signal from an RFID reader, which induces a coil of NFC tag 202. NFC tag 202 may supply power generated by the induction of said coil to clock generator 201 (step 301). Each clock cycle begins upon the receipt of power from NFC tag 202. For example, receipt of a supply of power from NFC tag 202 may initiate clock cycle 1, clock cycle 2, ... clock cycle n. In response, clock generator 201 may return a signal 302 to the NFC tag 202. At step 303, in response to the receipt of signal 302, NFC tag 202 may increment the counter 305 by a value N to generate a salt in the form of a temporary identifier C1. In some embodiments, N may be an integer value. N and/or the initial counter value may be unique to the transaction card 200A. At step 304, NFC tag 202 may then append this salt C1, e.g., the counter + N, to the permanent identifier 306, e.g., the tag and generate an encryption of (PI + C1). NFC tag 202 may store C1 as the new counter value.

The above process is repeated each time NFC tag 202 receives a signal from an RFID reader. In parallel, SP device 140 may receive an indication from user device 110 that a mobile application initiated an RFID reader. The SP device 140 may store the permanent identifier, initial counter value, and increment value. The SP device 140 may increment the counter each time information is received from user device 110 indicating that the RFID reader was initiated. When a user requests authentication via user device 110, the RFID reader of the device may receive, from RFID transmitter 203, the encrypted value generated by NFC tag 202 and send the encrypted value to SP device 140. To authenticate the user, SP device 140 may verify the encrypted value by comparing the encrypted value from the transaction card 200A with the encrypted value generated by the SP device 140.

In some embodiments, the counter value of the transaction card may become out of sync with the counter value of the SP device. For example, if the transaction card was not successfully read, user device 110 may not communicate with SP device 140 to increment the counter. However, even if the transaction card is not read, NFC tag 202 may receive a signal from the RFID reader causing the counter to increment. In some embodiments, if the transaction card 120 is out of sync with SP device 140, SP device 140 may instruct the user, via user device 110, to tap the card a certain number of times to the mobile device 110, thereby generating a certain number of reads of the card causing the counter 305 of the card to increment. SP device 140 may determine that the sequence of encrypted values generated by performing the certain number of taps matches the expected sequence of encrypted values. If the sequence matches, SP device 140 may cause user device 110 to send instructions to transaction card 120 to reset.

The system may include a threshold number of cycles by which the NFC tag 202 and SP device 140 can be out of sync. For example, an innocent action, such as suboptimal card placement or an aborted attempt, may cause the transaction card and SP device to fall out of sync. A threshold number may be set such that, as long as the counter values match within the threshold number of cycles, the user may be authenticated. In this embodiment, the counter value of the card will be set as the current counter value of the SP device if it is within the threshold number of cycles. In another example, the counter may fall out of sync as a result of fraudulent activity. If the counters do not match within the threshold number of cycles, the authentication request may be denied and a fraud alert may be sent to the user and/or financial service provider. Additionally, this method of authentication protects against fraud because even if the encryption of the permanent identifier and temporary identifier is copied, a nefarious user would be unable to replay the copied encrypted value and be authenticated by the system.

Figure 2B is a diagram of another exemplary card 200B, which may correspond to transaction card 120 (Fig. 1) consistent with disclosed embodiments. Transaction card 200B may include an NFC tag 202 and RFID transmitter 203, as well as a real time clock (RTC) 204 powered by a power source 205.

RTC 204 may be an integrated circuit configured to keep accurate time. That is, RTC 204 may cycle on each second, thereby incrementing the stored time. When NFC tag 202 receives a signal from an RFID reader, RTC 204 may respond by sending a timestamp to NFC tag 202 such that the timestamp may be appended to the permanent identifier. In another embodiment, the timestamp may be appended to a numerical value. For enhanced user security, RTC 204 may be set to a unique starting time for each transaction card such that the timestamp at a given moment is different for each card.

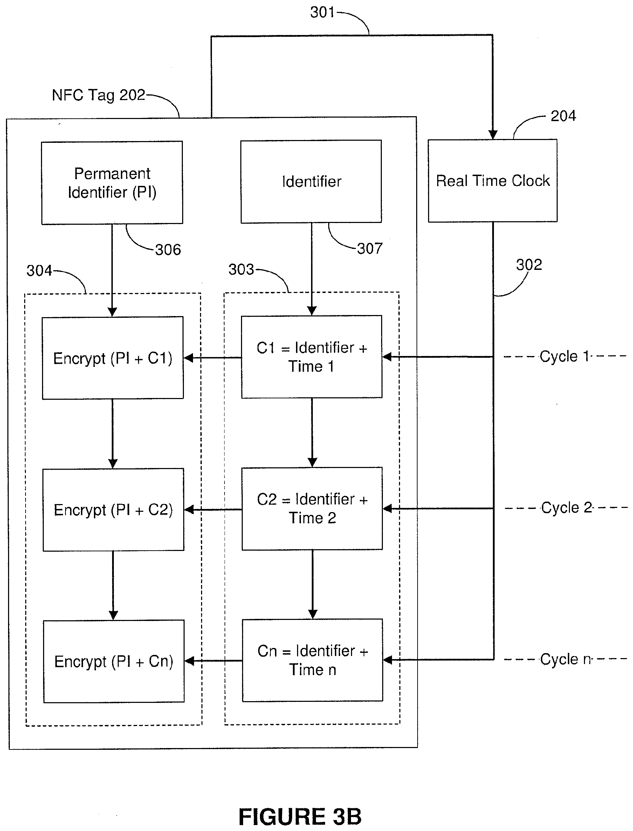

For example, with reference to Figure 3B, upon receiving a read from an RFID reader and inducing a current in the IC of NFC tag 202, NFC tag 202 sends a ping 301 to RTC 204. In response, RTC 204 initiates Cycle 1 and sends a signal 302 including the current timestamp, Time 1, to NFC tag 202. NFC tag 202, at step 303, appends current time stamp Time 1 to an identifier 307 unique to the transaction card to generate salt C1. At step 304, NFC tag 202 appends C1 to the permanent identifier 306 associated with the transaction card and generates an encrypted value of the PI + C1. In some embodiments, the encrypted value may be a hash of the PI + C1. In some embodiments, the timestamp may itself be the salt and may be directly appended to the PI 306 without first being appended and/or added to an identifier 307. The generated encrypted value may be compared to an encrypted value of the permanent identifier and the timestamp at the first clock cycle generated by SP device 140. If the encrypted values match, the user may be authenticated. RTC 204 of transaction card 200B and a corresponding RTC of SP device 140 may be synced by initiating both RTC's to the same time. In this embodiment, because the temporary identifier, e.g., salt, at any given clock cycle is only valid during a brief time period, the authentication by transaction card 200B is highly secure. For example, the encrypted value may be valid for a predetermined window of time, e.g., 30 seconds, 60 seconds, etc. In some embodiments, to account for drift between the server clock and RTC 204, the system may accept a certain number of values before and after the current accepted value. While the use of an RTC to generate a salt is highly secure, RTC 204 requires a power source 205, e.g., a battery or other power source, to operate accurately.

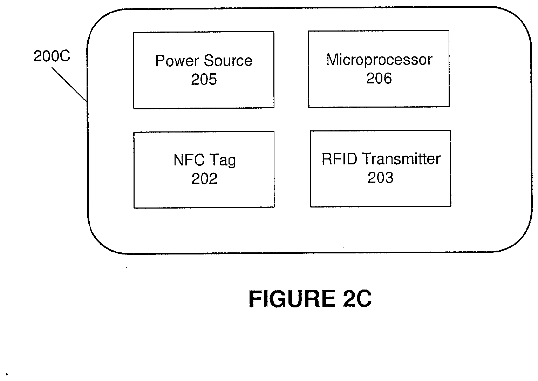

Figure 2C is a diagram of yet another exemplary card 200C, which may correspond to transaction card 120 (Fig. 1) consistent with disclosed embodiments. Transaction card 200C may include an NFC tag 202 and RFID transmitter 203, as well as a microprocessor 206 powered by a power source 205, e.g., a battery.

Microprocessor 206 may be, for example, a microprocessor from the Pentium^{™} or Xeon^{™} family manufactured by Intel^{™}, the Turion^{™} family manufactured by AMD^{™}, or any of various processors manufactured by Sun Microsystems. In other embodiments, microprocessor 206 may be a programmable logic device. Microprocessor 206 may be configured to implement an algorithm such that the counter stored by NFC tag 202 is incremented by a different value at each clock cycle.

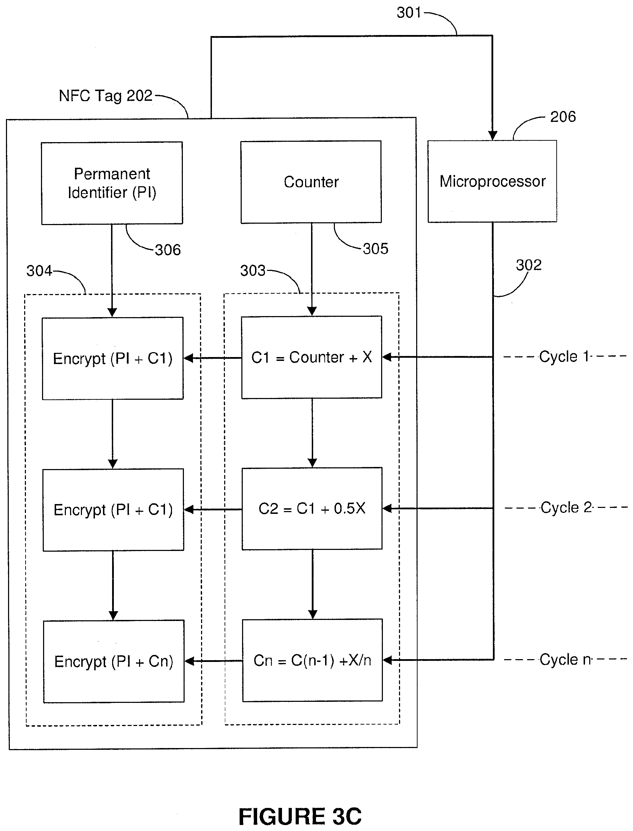

Figure 3C is a simplified example of a series of clock cycles. As previously described, NFC tag 202 sends a ping 301 to microprocessor 206 upon receipt of a signal from an RFID reader. Microprocessor 206 responds by sending the result of the application of an algorithm to X to NFC tag 202. For example, microprocessor 206 may be configured such that a value X is divided by the number of the clock cycle. Thus, at a first clock cycle, Cycle 1, the counter 305 is incremented by X/1 to generate a temporary identifier, e.g., salt, C1 (step 303). At Cycle 2, the salt C1 generated during Cycle 1 is incremented by X/2 to generate salt C2, and so on. More complex algorithms may be implemented to generate the temporary identifier at each clock cycle. At step 304, NFC tag 202 appends the salt generated at step 303 to the permanent identifier 306 associated with the transaction card and determines an encrypted value of the permanent identifier 306 and the salt. Depending on the desired complexity, the algorithm stored by the processor may be directly applied to counter 305. In other embodiments, the result of the algorithm may be the temporary identifier, C1. As previously described, the user may be authenticated by verifying the encrypted value generated at step 304 with an expected encrypted value generated by SP device 140.

In some embodiments, if the transaction card 120 and SP device 140 fall out of sync, SP device 140 may send instructions to user device 110 to send a signal to NFC tag 202 to reset the counter. In some embodiments, the user may be required to provide several authentication factors before resetting the NFC tag 202. When NFC tag 202 is reset, the counter or RTC may be set to its initial starting value. In other embodiments, for increased security, the counter or RTC may be set to a value different from the starting value. In another embodiment, user device 110 may transmit a new algorithm to microprocessor 206 or may alter the increment by which the counter (see, Fig. 3A) is increased.

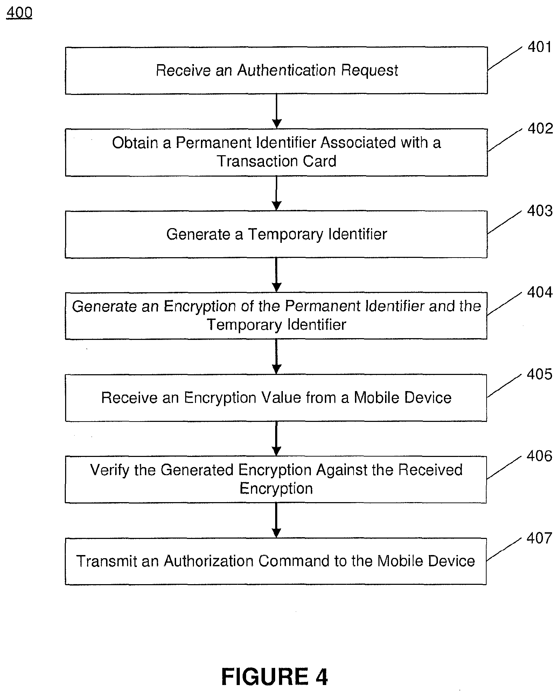

Figure 4 is a flowchart depicting an exemplary process 400 for authenticating a user with a transaction card having a polymorphic tag.

At step 401, system 100 receives, at SP device 140, a request for authentication from user device 110. In some embodiments, the request for authentication may be made in connection with, for example, a purchase, transfer, or payment via a mobile application of the financial service provider. The financial service provider may require one or more factors to authenticate the user. The authentication request may include identifying information such as user ID, account number, etc. to associate the user with a transaction card.

At step 402, SP device 140 obtains, from a memory or database, a permanent identifier associated with the transaction card. In some embodiments the permanent identifier is a private key.

At step 403, SP device 140 generates a temporary identifier. The temporary identifier may be generated using any of the above methods described with reference to Figs. 3A-3C.

At step 404, SP device 140 generates an encryption of the permanent identifier and the temporary identifier.

At step 405, SP device 140 receives, via network 130, an encryption value from user device 110. The encryption value may be obtained from transaction card 120 via an RFID reader of user device 110.

At step 406, the SP device 140 verifies the generated encryption value against the received encryption value. In some embodiments, verification may include a comparison of the encryption values. If the values are equal, the user may be authenticated. In some embodiments, SP device 140 may store expected encryption values associated with one or more clock cycles up to a threshold number of clock cycles. Thus, in some embodiments, if the received encryption value matches any of the values, the user may be authenticated.

At step 407, SP device 140 may transmit an authentication command to the mobile device associated with the user. For example, SP device 140 may transmit, via network 130, instructions causing the mobile device to complete the transaction requiring authentication by the user.

In some embodiments, a transaction card associated with a financial account and for generating an encrypted value as part of an authentication request is provided. The transaction card may include a radio frequency transmitter; a clock generator coupled to the radio frequency transmitter, the clock generator being configured to increment a counter value responsive to a wireless read signal received from an external radio frequency reader device; and a near field communication tag coupled to the radio frequency transmitter and storing a permanent identifier and the counter value. The near field communication tag may be configured, in response to the received read signal, to: generate an encrypted value based on the permanent identifier and the counter value; and provide the encrypted value to the radio frequency transmitter for transmission to the external radio frequency reader device.

The permanent identifier may include a private key.

The radio frequency transmitter may be configured to generate a digital signal when the clock generator cycles on.

The clock generator may be configured to increment the counter value by a preconfigured amount when the clock generator cycles on. The clock generator may also be configured to update a temporary identifier, a numerical value, and the incremented counter value when the clock cycle generator cycles on. The numerical value may be unique to the transaction card. The near field communication tag may be configured to generate the encrypted value based on the permanent identifier, the counter value, and the numerical value. The near field communication tag may also be configured to store the numerical value after transmissions by the radio frequency transmitter.

In some embodiments, the transaction card may include a radio frequency transmitter; a near field communication tag coupled to the radio frequency transmitter; and a clock coupled to the near field communication tag and powered by a power source. The clock may be configured to send a time value to the near field communication tag responsive to a wireless read signal received by the near field communication tag from an external radio frequency reader device. The near field communication tag may be configured to: store a permanent identifier and the time value; and, in response to the received read signal, to: generate an encrypted value based on the permanent identifier and the time value; and provide the encrypted value to the radio frequency transmitter for transmission to the external radio frequency reader device.

The power source may include a battery. The power source may supply power to at least one of the radio frequency transmitter or the near field communication tag.

The time value may include a timestamp of the clock. The time value may include the timestamp and a numerical value unique to the transaction card. The time value valid only during a preconfigured time period.

In another embodiment, the transaction card may include: a radio frequency transmitter; a near field communication tag coupled to the radio frequency transmitter; and a microprocessor coupled to the near field communication tag and powered by a power source. The microprocessor may be configured to calculate an update value responsive to a wireless read signal received from an external radio frequency reader device. The near field communication tag may be configured to: store a permanent identifier and the update value, and in response to the received read signal: generate an encrypted value based on the permanent identifier and the update value, and provide the encrypted value to the radio frequency transmitter for transmission to the external radio frequency reader device.

The near field communication tag may be configured to generate a temporary identifier based on the update value while the radio frequency transmitter is transmitting.

The microprocessor may be further configured to vary the update value between subsequent transmissions. The update value may be calculated based on an algorithm. The algorithm may be unique to the transaction card.

The transaction card may further include a memory component coupled to the microprocessor.

The exemplary disclosed embodiments describe systems and methods for authenticating a user with a transaction card comprising a polymorphic tag. The foregoing description has been presented for purposes of illustration. It is not exhaustive and is not limited to the precise forms or embodiments disclosed. Modifications and adaptations of the embodiments will be apparent from consideration of the specification and practice of the disclosed embodiments. For example, the described implementations include hardware and software, but systems and methods consistent with the present disclosure can be implemented as hardware alone.

Computer programs based on the written description and methods of this specification are within the skill of a software developer. The various programs or program modules can be created using a variety of programming techniques. For example, program sections or program modules can be designed in or by means of Java, C, C++, assembly language, or any such programming languages. One or more of such software sections or modules can be integrated into a computer system, computer-readable media, or existing communications software.

Moreover, while illustrative embodiments have been described herein, the elements in the claims are to be interpreted broadly based on the language employed in the claims and not limited to examples described in the present specification or during the prosecution of the application, which examples are to be construed as non-exclusive. Further, the steps of the disclosed methods can be modified in any manner, including by reordering steps or inserting or deleting steps without departing from the appended claims.

Furthermore, although aspects of the disclosed embodiments are described as being associated with data stored in memory and other tangible computer-readable storage mediums, one skilled in the art will appreciate that these aspects can also be stored on and executed from many types of non-transitory computer-readable media, such as secondary storage devices, like hard disks, floppy disks, or CD-ROM, or other forms of RAM or ROM.

It is intended, therefore, that the specification and examples be considered as example only, with a true scope being indicated by the following claims.

## Claims

1. A transaction card (120, 200A, 200B, 200C) for read-only authentication, the transaction card readable by an application executing on a user device (110) associated with a user of the transaction card, the transaction card comprising:
a memory device storing a counter value (305) and a permanent identifier (306);
one or more microprocessors (206) having access to the counter value and the permanent identifier; and
a near field communication, NFC, transmitter (202) configured to transmit to the application in response to a wireless read signal received from the user device;
wherein, responsive to the wireless read signal, the one or more microprocessors are configured to:
increment the counter value to generate an incremented counter value (303);
generate an encrypted value (304) based on appending the incremented counter value to the permanent identifier and encrypting a resulting data;
provide the encrypted value to the near field communication transmitter for transmission to the application executing on the user device for onward communication to a server as part of an authentication request generated by the application; and
reset the counter value to an initial value in response to an instruction received from the user device.

2. The transaction card of claim 1, wherein the one or more microprocessors are configured to increment the counter value by a preconfigured value that is unique to the transaction card.

3. The transaction card of claim 1, wherein the one or more microprocessors are configured to increment the counter value by a different value each time.

4. The transaction card of claim 3, wherein the different value by which the counter value is incremented is calculated based on an algorithm

5. The transaction card of claim 1, wherein the one or more microprocessors are further configured to, in response to the instruction received from the user device, reset the counter value to a value different than the initial counter value.

6. The transaction card of claim 1, wherein the one or more microprocessors are included within an EMV chip.

7. The transaction card of claim 1, wherein the transaction card comprises at least one selected from the group of a credit card, a debit card, a gift card, a rewards card, a frequent flyer card, a merchant-specific card, a discount card, a passport card, a driver's license, and an entry point access card.

8. A computer-implemented method for authenticating a user with a transaction card (120, 200A, 200B, 200C) for read-only authentication, the transaction card associated with the user and comprising a memory storing a counter value (305) and a permanent identifier (306), the memory being coupled to a microprocessor (206) of the transaction card (120, 200A, 200B, 200C), the method comprising:
generating, by an application executing on a user device (110) associated with the user, an authentication request, the authentication request being transmitted, by the application to a server (140);
incrementing, by the microprocessor and in response to a wireless read signal from the user device, the counter value to generate an incremented counter value (303);
generating, by the microprocessor, an encrypted value (304) based on appending the incremented counter value to the permanent identifier and encrypting a resulting data;
transmitting, by the application, the encrypted value to the server as part of the authentication request generated and transmitted by the application to the server;
resetting, by the microprocessor and in response to an instruction received from the user device, the counter value to an initial value;
receiving (401), by the server, the encrypted value as part of the authentication request transmitted from the application executing on the user device, the encrypted value being transmitted, by the transaction card, to the user device following the receipt of the wireless read signal;
generating, by the server, an expected counter value in response to the authentication request, the expected counter value being incremented each time an authentication request is received from the user device;
generating, by the server, an expected encrypted value based on appending the expected counter value to the permanent identifier and encrypting a resulting data;
comparing, by the server, the encrypted value received from the transaction card with the expected encrypted value generated by the server ; and
authenticating, by the server, the user based on a match between the received and the expected encryption values.

9. The computer-implemented method of claim 8, further comprising, in response to the instruction received from the user device, resetting, by the transaction card, the counter value to a value different than the initial counter value.

10. The computer-implemented method of claim 8, further comprising transmitting, to the user device, instructions configured to cause the user device to complete an action associated with the request for authentication.

11. The computer-implemented method of claim 8, wherein at least one selected from the group of the generated encrypted value and the received encrypted value is valid for a predetermined amount of time.

12. The computer-implemented method of claim 8, further comprising:
generating a fraud alert message upon determining that a received encrypted value and the expected encrypted value are not equal; and
transmitting the fraud alert message to the user device.

13. The computer-implemented method of claim 8, wherein authenticating the user allows for at least one selected from the group of a completion of a transaction, a log-in or authentication with a website or device, a cash withdrawal, a wire transfer, a PIN reset, and a call center transaction.

14. The computer-implemented method of claim 13, wherein:
the request for authentication comprises identifying information, and
the identifying information comprises at least one selected from the group of a user identification and an account number.

15. A computing system for authenticating a user with a transaction card (120, 200A, 200B, 200C) for read-only authentication, the computing system comprising:
a service provider, SP, device (140) comprising a processor and a memory, the SP device being in network communication with an application executing on a user device (110) associated with a user, wherein the application is configured to transmit an authentication request to the SP device;
a transaction card comprising a processor (206), a memory storing a counter value (305) and a permanent identifier (306), and a near field communication, NFC, transmitter (202), wherein the transaction card is associated with the user;
wherein the processor of the transaction card, responsive to a wireless read signal from the user device, is configured to:
increment the counter value to generate an incremented counter value (303);
generate an encrypted value (304) based on appending the incremented counter value to the permanent identifier and encrypting a resulting data;
transmit the encrypted value, via the NFC transmitter, to the application executing on the user device, the application being configured to transmit the encrypted value to the SP device as part of the authentication request; and
reset, in response to an instruction received from the user device, the counter value to an initial value;
wherein the processor of the SP device, responsive to receiving the authentication request from the application is configured to:
receive, from the application, the encrypted value generated by the transaction card;
generate an expected counter value;
generate an expected encrypted value based on appending the expected counter value to the permanent identifier and encrypting a resulting data; and
compare the expected encrypted value and the encrypted value received from the user device to authenticate the user.

16. The computing system of claim 15, wherein the processor of the SP device is further configured to, in response to a signal received from the user device, reset the expected counter value to a value different than the initial counter value.

17. The computing system of claim 15, wherein authenticating the user allows for at least one selected from the group of a completion of a transaction, a log-in or authentication with a website or device, a cash withdrawal, a wire transfer, a PIN reset, and a call center transaction.

18. The computing system of claim 15, wherein the processor of the SP device is further configured to generate a fraud alert message upon determining that a received encrypted value and the expected encrypted value are not equal.

19. The computing system of claim 18, wherein the processor of the SP device is further configured to transmit the fraud alert message to the user device.

## Patentansprüche

1. Transaktionskarte (120, 200A, 200B, 200C) zur Nur-Lese-Authentifizierung, wobei die Transaktionskarte von einer Anwendung gelesen werden kann, die auf einer Benutzervorrichtung (110) läuft, die einem Benutzer der Transaktionskarte zugeordnet ist, wobei die Transaktionskarte Folgendes umfasst:
eine Speichervorrichtung, die einen Zählerwert (305) und eine permanente Kennung (306) speichert;
einen oder mehrere Mikroprozessoren (206), die Zugriff auf den Zählerwert und die permanente Kennung haben; und
einen Nahfeldkommunikations-, NFC-, Sender (202), der dazu konfiguriert ist, als Reaktion auf ein von der Benutzervorrichtung empfangenes drahtloses Lesesignal an die Anwendung zu übertragen;
wobei als Reaktion auf das drahtlose Lesesignal der eine oder die mehreren Mikroprozessoren konfiguriert sind zum:
Inkrementieren des Zählerwerts, um einen inkrementierten Zählerwert (303) zu erzeugen;
Erzeugen eines verschlüsselten Werts (304), basierend auf dem Anhängen des inkrementierten Zählerwerts an die permanente Kennung und Verschlüsseln von sich ergebenden Daten;
Bereitstellen des verschlüsselten Werts an den Nahfeldkommunikationssender zum Übertragen an die Anwendung, die auf der Benutzervorrichtung läuft, zur Weiterleitung an einen Server als Teil einer Authentifizierungsanforderung, die von der Anwendung erzeugt wird; und
Zurücksetzen des Zählerwerts auf einen Anfangswert als Reaktion auf eine Anweisung, die von der Benutzervorrichtung empfangen wird.

2. Transaktionskarte nach Anspruch 1, wobei der eine oder die mehreren Mikroprozessoren dazu konfiguriert sind, den Zählerwert um einen vorkonfigurierten Wert, der für die Transaktionskarte eindeutig ist, zu inkrementieren.

3. Transaktionskarte nach Anspruch 1, wobei der eine oder die mehreren Mikroprozessoren dazu konfiguriert sind, den Zählerwert jedes Mal um einen unterschiedlichen Wert zu inkrementieren.

4. Transaktionskarte nach Anspruch 3, wobei der Differenzwert, um den der Zählerwert inkrementiert wird, basierend auf einem Algorithmus berechnet wird.

5. Transaktionskarte nach Anspruch 1, wobei der eine oder die mehreren Mikroprozessoren weiter dazu konfiguriert sind, als Reaktion auf die von der Benutzervorrichtung empfangene Anweisung den Zählerwert auf einen Wert, der sich von dem anfänglichen Zählerwert unterscheidet, zurückzusetzen.

6. Transaktionskarte nach Anspruch 1, wobei der eine oder die mehreren Mikroprozessoren in einem EMV-Chip beinhaltet sind.

7. Transaktionskarte nach Anspruch 1, wobei die Transaktionskarte mindestens eines ausgewählt aus der Gruppe einer Kreditkarte, einer Debitkarte, einer Geschenkkarte, einer Prämienkarte, einer Vielfliegerkarte, einer händlerspezifischen Karte, einer Rabattkarte, einer Reisepasskarte, eines Führerscheins und einer Eintrittspunkt-Zutrittskarte umfasst.

8. Computerimplementiertes Verfahren zum Authentifizieren eines Benutzers mit einer Transaktionskarte (120, 200A, 200B, 200C) zur Nur-Lese-Authentifizierung, wobei die Transaktionskarte dem Benutzer zugeordnet ist und einen Speicher zum Speichern eines Zählerwerts (305) und einer permanenten Kennung (306) umfasst, wobei der Speicher mit einem Mikroprozessor (206) der Transaktionskarte (120, 200A, 200B, 200C) gekoppelt wird, wobei das Verfahren Folgendes umfasst:
Erzeugen, durch eine Anwendung, die auf einer Benutzervorrichtung (110) läuft, die dem Benutzer zugeordnet ist, einer Authentifizierungsanforderung, wobei die Authentifizierungsanforderung von der Anwendung an einen Server (140) übertragen wird;
Inkrementieren, durch den Mikroprozessor und als Reaktion auf ein drahtloses Lesesignal von der Benutzervorrichtung des Zählerwerts um einen inkrementierten Zählerwert (303) zu erzeugen;
Erzeugen, durch den Mikroprozessor, eines verschlüsselten Werts (304), basierend auf und dem Anhängen des inkrementierten Zählerwerts an die permanente Kennung und Verschlüsseln von sich ergebenden Daten;
Übertragen, durch die Anwendung, des verschlüsselten Werts an den Server als Teil der Authentifizierungsanforderung, die von der Anwendung erzeugt und an den Server übertragen wird;
Zurücksetzen, durch den Mikroprozessor und als Reaktion auf eine Anweisung, die von der Benutzervorrichtung empfangen wird, des Zählerwerts auf einen anfänglichen Wert;
Empfangen (401), durch den Server, des verschlüsselten Werts als Teil der Authentifizierungsanforderung, die von der Anwendung, die auf der Benutzervorrichtung läuft, übertragen wird, wobei der verschlüsselte Wert von der Transaktionskarte an die Benutzervorrichtung im Anschluss an den Empfang des drahtlosen Lesesignals übertragen wird;
Erzeugen, durch den Server, eines erwarteten Zählerwerts als Reaktion auf die Authentifizierungsanforderung, wobei der erwartete Zählerwert bei jedem Empfangen einer Authentifizierungsanforderung von der Benutzervorrichtung inkrementiert wird;
Erzeugen, durch den Server, eines erwarteten verschlüsselten Werts basierend auf dem Anhängen des erwarteten Zählerwerts an die permanente Kennung und Verschlüsseln von sich ergebenden Daten;
Vergleichen, durch den Server, des verschlüsselten Werts, der von der Transaktionskarte empfangen wird, mit dem erwarteten verschlüsselten Wert, der von dem Server erzeugt wird; und
Authentifizieren des Benutzers durch den Server basierend auf einer Übereinstimmung zwischen dem empfangenen und dem erwarteten Verschlüsselungswert.

9. Computerimplementiertes Verfahren nach Anspruch 8, das weiter als Reaktion auf die Anweisung, die von der Benutzervorrichtung empfangen wird, das Zurücksetzen durch die Transaktionskarte des Zählerwerts auf einen Wert, der sich von dem anfänglichen Zähler Wert unterscheidet, umfasst.

10. Computerimplementiertes Verfahren nach Anspruch 8, das weiter das Übertragen an die Benutzervorrichtung von Anweisungen umfasst, die dazu konfiguriert sind, die Benutzervorrichtung zu veranlassen, eine Aktion, die der Authentifizierungsanforderung zugeordnet ist, abzuschließen.

11. Computerimplementiertes Verfahren nach Anspruch 8, wobei mindestens einer ausgewählt aus der Gruppe des erzeugten verschlüsselten Werts und des empfangenen verschlüsselten Werts für eine vorbestimmte Zeitspanne gültig ist.

12. Computerimplementiertes Verfahren nach Anspruch 8, das weiter Folgendes umfasst:
Erzeugen einer Betrugswarnungsnachricht beim Bestimmen, dass ein empfangener verschlüsselter Wert und
der erwartete verschlüsselte Wert nicht gleich sind; und Übertragen der Betrugswarnungsnachricht an die Benutzervorrichtung.

13. Computerimplementiertes Verfahren nach Anspruch 8, wobei das Authentifizieren des Benutzers mindestens eines ausgewählt aus der Gruppe von einem Abschluss einer Transaktion, einer Anmeldung oder Authentifizierung bei einer Website oder einer Vorrichtung, einer Bargeldabhebung, einer Überweisung, einem Zurücksetzen einer PIN und einer Callcenter-Transaktion erlaubt.

14. Computerimplementiertes Verfahren nach Anspruch 13, wobei:
die Authentifizierungsanforderung identifizierende Informationen umfasst, und
die identifizierenden Informationen mindestens eines ausgewählt aus der Gruppe von Benutzerkennung und/oder Kontonummer umfassen.

15. Rechensystem zum Authentifizieren eines Benutzers mit einer Transaktionskarte (120, 200A, 200B, 200C) zur Nur-Lese-Authentifizierung, wobei das Rechensystem Folgendes umfasst:
eine Dienstanbieter-, SP-, Vorrichtung (140), die einen Prozessor und einen Speicher umfasst, wobei die SP-Vorrichtung in Netzwerkkommunikation mit einer Anwendung steht, die auf einer Benutzervorrichtung (110) läuft, die einem Benutzer zugeordnet ist, wobei die Anwendung dazu konfiguriert ist, eine Authentifizierungsanforderung an die SP-Vorrichtung zu senden;
eine Transaktionskarte, die einen Prozessor (206), einen Speicher zum Speichern eines Zählerwerts (305) und einer permanenten Kennung (306) sowie einen Nahfeldkommunikations-, NFC-, Sender (202) umfasst, wobei die Transaktionskarte dem Benutzer zugeordnet ist;
wobei der Prozessor der Transaktionskarte als Reaktion auf ein drahtloses Lesesignal von der Benutzervorrichtung konfiguriert ist zum:
Inkrementieren des Zählerwerts, um einen inkrementierten Zählerwert (303) zu erzeugen;
Erzeugen eines verschlüsselten Werts (304), basierend auf dem Anhängen des inkrementierten Zählerwerts an die permanente Kennung und Verschlüsseln von sich ergebenden Daten;
Übertragen des verschlüsselten Werts über den NFC-Sender an die Anwendung, die auf der Benutzervorrichtung läuft, wobei die Anwendung dazu konfiguriert ist, den verschlüsselten Wert an die SP-Vorrichtung als Teil der Authentifizierungsanforderung zu übertragen; und
Zurücksetzen, als Reaktion auf eine Anweisung, die von der Benutzervorrichtung empfangen wird, des Zählerwerts auf einen anfänglichen Wert;
wobei der Prozessor der SP-Vorrichtung als Reaktion auf das Empfangen der Authentifizierungsanforderung von der Anwendung konfiguriert ist zum:
Empfangen, von der Anwendung, des verschlüsselten Werts, der von der Transaktionskarte erzeugt wird;
Erzeugen eines erwarteten Zählerwerts;
Erzeugen eines erwarteten verschlüsselten Werts, basierend auf dem Anhängen des erwarteten Zählerwerts an die permanente Kennung und Verschlüsseln von sich ergebenden Daten; und
Vergleichen des erwarteten verschlüsselten Werts und des verschlüsselten Werts, der von der Benutzervorrichtung empfangen wird, zum Authentifizieren des Benutzers.

16. Rechensystem nach Anspruch 15, wobei der Prozessor der SP-Vorrichtung weiter dazu konfiguriert ist, als Reaktion auf ein von der Benutzervorrichtung empfangenes Signal den erwarteten Zählerwert auf einen anderen Wert als den anfänglichen Zählerwert zurückzusetzen.

17. Rechensystem nach Anspruch 15, wobei das Authentifizieren des Benutzers mindestens eines erlaubt aus der Gruppe von einem Abschluss einer Transaktion, einer Anmeldung oder Authentifizierung bei einer Website oder einer Vorrichtung, einer Bargeldabhebung, einer Überweisung, einem Zurücksetzen einer PIN und einer Callcenter-Transaktion.

18. Rechensystem nach Anspruch 15, wobei der Prozessor der SP-Vorrichtung weiter dazu konfiguriert ist, beim Bestimmen, dass ein empfangener verschlüsselter Wert und der erwartete verschlüsselte Wert nicht gleich sind, eine Betrugswarnungsnachricht zu erzeugen.

19. Rechensystem nach Anspruch 18, wobei der Prozessor der SP-Vorrichtung weiter dazu konfiguriert ist, die Betrugswarnungsnachricht an die Benutzervorrichtung zu übertragen.

## Revendications

1. Carte de transaction (120, 200A, 200B, 200C) pour l'authentification en lecture seule, la carte de transaction étant lisible par une application s'exécutant sur un dispositif utilisateur (110) associé à un utilisateur de la carte de transaction, la carte de transaction comprenant :
un dispositif mémoire stockant une valeur de compteur (305) et un identifiant permanent (306) ;
un ou plusieurs microprocesseurs (206) ayant accès à la valeur de compteur et à l'identifiant permanent ; et
un émetteur de communication en champ proche, NFC, (202) configuré pour transmettre vers l'application en réponse à un signal de lecture sans fil reçu du dispositif utilisateur ;
dans laquelle, en réponse au signal de lecture sans fil, les un ou plusieurs microprocesseurs sont configurés pour :
incrémenter la valeur de compteur pour générer une valeur de compteur incrémentée (303) ;
générer une valeur chiffrée (304) basée sur l'ajout de la valeur de compteur incrémentée à l'identifiant permanent et le chiffrement de données résultantes ;
fournir la valeur chiffrée à l'émetteur de communication en champ proche pour transmission à l'application s'exécutant sur le dispositif utilisateur, en vue de sa retransmission à un serveur dans le cadre d'une demande d'authentification générée par l'application ; et
réinitialiser la valeur de compteur à une valeur initiale en réponse à une instruction reçue du dispositif utilisateur.

2. Carte de transaction selon la revendication 1, dans laquelle les un ou plusieurs microprocesseurs sont configurés pour incrémenter la valeur de compteur d'une valeur préconfigurée qui est propre à la carte de transaction.

3. Carte de transaction selon la revendication 1, dans laquelle les un ou plusieurs microprocesseurs sont configurés pour incrémenter la valeur de compteur d'une valeur différente à chaque fois.

4. Carte de transaction selon la revendication 3, dans laquelle la valeur différente de laquelle est incrémentée la valeur de compteur est calculée en fonction d'un algorithme.

5. Carte de transaction selon la revendication 1, dans laquelle les un ou plusieurs microprocesseurs sont en outre configurés pour, en réponse à l'instruction reçue du dispositif utilisateur, réinitialiser la valeur de compteur à une valeur différente de la valeur de compteur initiale.

6. Carte de transaction selon la revendication 1, dans laquelle les un ou plusieurs microprocesseurs sont inclus dans une puce EMV.

7. Carte de transaction selon la revendication 1, dans laquelle la carte de transaction comprend au moins un élément sélectionné dans le groupe suivant : une carte de crédit, une carte de débit, une carte-cadeau, une carte de fidélité, une carte d'avantages pour voyageurs fréquents, une carte propre au commerçant, une carte de réduction, une carte-passeport, un permis de conduire et une carte d'accès à un point d'entrée.

8. Procédé mis en œuvre par ordinateur pour authentifier un utilisateur à l'aide d'une carte de transaction (120, 200A, 200B, 200C) pour une authentification en lecture seule, la carte de transaction étant associée à l'utilisateur et comprenant une mémoire stockant une valeur de compteur (305) et un identifiant permanent (306), la mémoire étant couplée à un microprocesseur (206) de la carte de transaction (120, 200A, 200B, 200C), le procédé comprenant :
la génération, par une application s'exécutant sur un dispositif utilisateur (110) associé à l'utilisateur, d'une demande d'authentification, la demande d'authentification étant transmise, par l'application, à un serveur (140) ;
l'incrémentation, par le microprocesseur et en réponse à un signal de lecture sans fil provenant du dispositif utilisateur, de la valeur de compteur pour générer une valeur de compteur incrémentée (303) ;
la génération, par le microprocesseur, d'une valeur chiffrée (304) basée sur l'ajout de la valeur de compteur incrémentée à l'identifiant permanent et le chiffrement des données résultantes ;
la transmission, par l'application, de la valeur chiffrée au serveur dans le cadre de la demande d'authentification générée et transmise par l'application au serveur ;
la réinitialisation, par le microprocesseur et en réponse à une instruction reçue du dispositif utilisateur, de la valeur de compteur à une valeur initiale ;
la réception (401), par le serveur, de la valeur chiffrée dans le cadre de la demande d'authentification transmise par l'application s'exécutant sur le dispositif utilisateur, la valeur chiffrée étant transmise, par la carte de transaction, au dispositif utilisateur après la réception du signal de lecture sans fil ;
la génération, par le serveur, d'une valeur de compteur attendue en réponse à la demande d'authentification, la valeur de compteur attendue étant incrémentée à chaque fois qu'une demande d'authentification est reçue du dispositif utilisateur ;
la génération, par le serveur, d'une valeur chiffrée attendue sur la base de l'ajout de la valeur de compteur attendue à l'identifiant permanent et du chiffrement de données résultantes ;
la comparaison, par le serveur, de la valeur chiffrée reçue de la carte de transaction avec la valeur chiffrée attendue générée par le serveur ; et
l'authentification de l'utilisateur par le serveur, en fonction d'une correspondance entre les valeurs de chiffrement reçue et attendue.

9. Procédé mis en œuvre par ordinateur selon la revendication 8, comprenant en outre, en réponse à l'instruction reçue du dispositif utilisateur, la réinitialisation, par la carte de transaction, de la valeur de compteur à une valeur différente de la valeur de compteur initiale.

10. Procédé mis en œuvre par ordinateur selon la revendication 8, comprenant en outre la transmission, au dispositif utilisateur, d'instructions configurées pour amener le dispositif utilisateur à effectuer une action associée à la demande d'authentification.

11. Procédé mis en œuvre par ordinateur selon la revendication 8, dans lequel au moins un élément sélectionné dans le groupe suivant : la valeur chiffrée générée et la valeur chiffrée reçue, est valable pendant une durée prédéterminée.

12. Procédé mis en œuvre par ordinateur selon la revendication 8, comprenant en outre :
la génération d'un message d'alerte à la fraude dès qu'il est déterminé qu'une valeur chiffrée reçue et
la valeur chiffrée attendue ne sont pas égales ; et la transmission du message d'alerte à la fraude au dispositif utilisateur.

13. Procédé mis en œuvre par ordinateur selon la revendication 8, dans lequel l'authentification de l'utilisateur permet au moins une action sélectionnée dans le groupe suivant : une réalisation d'une transaction, une connexion ou une authentification avec un site Web ou un dispositif, un retrait d'espèces, un virement bancaire, une réinitialisation de code PIN et une transaction de centre d'appels.

14. Procédé mis en œuvre par ordinateur selon la revendication 13, dans lequel :
la demande d'authentification comprend des informations d'identification, et
les informations d'identification comprennent au moins un élément sélectionné dans le groupe suivant : un identifiant d'utilisateur et un numéro de compte.

15. Système informatique d'authentification d'un utilisateur à l'aide d'une carte de transaction (120, 200A, 200B, 200C) pour une authentification en lecture seule, le système informatique comprenant :
un dispositif fournisseur de services, SP, (140) comprenant un processeur et une mémoire, le dispositif SP étant en communication réseau avec une application s'exécutant sur un dispositif utilisateur (110) associé à un utilisateur, dans lequel l'application est configurée pour transmettre une demande d'authentification au dispositif SP ;
une carte de transaction comprenant un processeur (206), une mémoire stockant une valeur de compteur (305) et un identifiant permanent (306), et un émetteur de communication en champ proche, NFC, (202), dans lequel la carte de transaction est associée à l'utilisateur ;
dans lequel le processeur de la carte de transaction, en réponse à un signal de lecture sans fil provenant du dispositif utilisateur, est configuré pour :
incrémenter la valeur de compteur pour générer une valeur de compteur incrémentée (303) ;
générer une valeur chiffrée (304) basée sur l'ajout de la valeur de compteur incrémentée à l'identifiant permanent et le chiffrement de données résultantes ;
transmettre la valeur chiffrée, via l'émetteur NFC, à l'application s'exécutant sur le dispositif utilisateur, l'application étant configurée pour transmettre la valeur chiffrée au dispositif SP dans le cadre de la demande d'authentification ; et
réinitialiser, en réponse à une instruction reçue du dispositif utilisateur, la valeur de compteur à une valeur initiale ;
dans lequel le processeur du dispositif SP, en réponse à la réception de la demande d'authentification de l'application, est configuré pour :
recevoir, de l'application, la valeur chiffrée générée par la carte de transaction ;
générer une valeur de compteur attendue ;
générer une valeur chiffrée attendue sur la base de l'ajout de la valeur de compteur attendue à l'identifiant permanent et du chiffrement des données résultantes ; et
comparer la valeur chiffrée attendue et la valeur chiffrée reçue du dispositif utilisateur pour authentifier l'utilisateur.

16. Système informatique selon la revendication 15, dans lequel le processeur du dispositif SP est en outre configuré pour, en réponse à un signal reçu du dispositif utilisateur, réinitialiser la valeur de compteur attendue à une valeur différente de la valeur de compteur initiale.

17. Système informatique selon la revendication 15, dans lequel l'authentification de l'utilisateur permet au moins une action sélectionnée dans le groupe suivant : un réalisation d'une transaction, une connexion ou une authentification avec un site Web ou un dispositif, un retrait d'espèces, un virement bancaire, une réinitialisation de code PIN et une transaction de centre d'appels.

18. Système informatique selon la revendication 15, dans lequel le processeur du dispositif SP est en outre configuré pour générer un message d'alerte à la fraude lorsqu'il détermine qu'une valeur chiffrée reçue et la valeur chiffrée attendue ne sont pas égales.

19. Système informatique selon la revendication 18, dans lequel le processeur du dispositif SP est en outre configuré pour transmettre le message d'alerte à la fraude au dispositif utilisateur.
